# EUROPEAN PATENT APPLICATION

(11) **EP 4 596 306 A1**
(43) Date of publication of application: **06.08.2025**
(21) Application number: 24155308.0
(22) Date of filing: 01.02.2024
(51) Int. Cl.: B60L 53/68, B60L 53/63, G06Q 50/40, G08G 1/01, G06Q 50/06, G06Q 10/063

(54) **METHOD AND CONTROLLER FOR VEHICLE CHARGING DIMENSIONING**

(71) Applicant: Scania CV AB, 151 87 Södertälje (SE)
(72) Inventor: RÅNBY, Gustav, 174 43 Sundbyberg (SE); HU, Hsiao-Chun, 645 32 Strängnäs (SE)
(74) Representative: Scania CV AB

(57) **Abstract**

Method (400) and controller (150) for vehicle charging dimensioning of a vehicle depot (230). The method (400) comprises: determining (401) stops (210) of a vehicle (100); associating (402) each stop (210) with a grid-based representation (200) of a geographical landscape, corresponding to the geographical position of the stop (210); establishing (403) a sequence (220) of stops (210) for the vehicle (100); identifying (404) a depot (230) among the stops (210) of the stop sequence (220), based on recurrence and/ or duration of time the vehicle (100) has stayed on each respective stop (210); splitting (405) each stop sequence (220) of the vehicle (100) into sub-sequences (240a, 240b) at the depot (230); and dimensioning (408) vehicle charging capacity of the vehicle depot (230) for charging vehicle batteries, based on estimated vehicle transportation requirements of the vehicle (100) while driving along the sub-sequences (240a, 240b) in a vehicle depot cycle.

## Description

### TECHNICAL FIELD

This document discloses a controller and a method. More particularly, a controller and a method are described for vehicle charging dimensioning of an identified vehicle depot.

### BACKGROUND

To electrify a fleet of vehicles, for example trucks, a reliable infrastructure for assuring vehicle charging is required and need to be developed. This means that to estimate the total cost of ownership for an electric vehicle, it is required to consider the needed investment in charging infrastructure and consider how this infrastructure needs to be dimensioned.

From a vehicle driver perspective, it is desired to find a candidate parking area along the road where the driver can stay to rest according to restrictions for driving time, but also to charge the electric vehicle. Not knowing whether there will be available electric charging stations at a planned stop might generate stress and insecurity among drivers.

It would also be desired to collect more information concerning for example the origin of the vehicles visiting at a certain location; estimated energy need at a candidate charging depot; typical mission range and energy usage for a vehicle operating at the candidate depot; number of overnight stops outside of the depot; and/ or how many parked depot vehicles there are at a given hour of a typical weekday or weekend (or a specific weekday).

The document US10218837 describes a system and method of predicting future demand of a charging station. Probe data from a plurality of electric vehicles is collected. The probe data comprises charging activity history of the plurality of electric vehicles. A usage pattern of a charging station is determined based on the probe data for the charging station. A future demand for the charging station is predicted by applying the usage pattern to a factor associated with a requesting electric vehicle. The predicted future demand for the charging station is provided to the requesting electric vehicle. The system and method in the document are not configured to quantify the vehicle operations at stops/ locations identified as vehicles depots or other locations.

Document US2023052733A2 relates to predicting the utilization of electric vehicle (EV) charge points. The method may comprise: receiving an indication of a plurality of candidate locations for EV charge points; determining static map features of the plurality of candidate locations; inputting the plurality of candidate locations and static map features into a machine learning model, where the machine learning model is trained on existing EV charge point locations, existing EV charge point static map features, and existing EV charge point utilization; determining, based on the machine learning model, a predicted utilization of an EV charge point at the plurality of candidate locations; and generating a representation of a map including the plurality of candidate locations, where candidate locations of the plurality of candidate locations are visually distinguished based on a respective predicted utilization of an EV charge point at the candidate locations. The steering control device in the document does not seem to be configured to continuously monitor, or compensate for, side pull/ misalignment based on values from on-board sensors measuring road inclination, yaw velocity, lateral acceleration etc. The system and method in the document are not configured to quantify the vehicle operations at stops identified as vehicles depots or other locations.

Document US2023052733A2 describes a system, method and program product for siting charging stations. A mobility detection module collects traffic data from vehicle sensors distributed in an area. A map matching module maps detected traffic in the area. A vehicle flow module temporally characterizes mapped traffic flow. An electric vehicle (EV) requirements (EVR) evaluator determines an optimal number of charging stations and respective locations for siting the charging stations. The system and method in the document are not configured to quantify the vehicle operations at locations identified as vehicles depots or other locations.

It may thus be desired to be able to obtain reliable information concerning vehicle operations of individual vehicles of a vehicle fleet, in order to dimension and design a charging infrastructure for vehicle charging. Thereby, also the calculation of the total cost of ownership for an electric vehicle is enabled.

### SUMMARY

It would be advantageous to achieve a convenient solution overcoming, or at least alleviating, at least some of the above mentioned drawback(s). In particular, it would be desirable to improve vehicle charging dimensioning of a vehicle depot. To better address this concern, a method and a controller having the features defined in the independent claims are provided.

According to a first aspect, this solution is achieved by a method for vehicle charging dimensioning of a vehicle depot. The method comprises the step of determining stop locations of a vehicle, wherein one stop location is a geographical position where the vehicle has stayed longer than a pre-determined time period. Also, the method comprises associating each determined stop location with a grid-based representation of a geographical landscape, corresponding to the geographical position of the determined stop location. Furthermore, the method in addition comprises establishing a sequence of determined stop locations for the vehicle. Also, the method comprises identifying a depot among the determined stop locations of the established stop sequence, for the vehicle, based on recurrence and/ or duration of time the vehicle has stayed on each respective determined stop location. The method comprises splitting each established stop sequence of the vehicle into sub-sequences at the depot. In addition, the method comprises dimensioning vehicle charging capacity of the identified vehicle depot for charging vehicle batteries of an electric vehicle, based on estimated vehicle transportation requirements of the vehicle while driving along the sub-sequences in a vehicle depot cycle.

Thanks to the described method, a tool is provided to quantify vehicle operations at locations identified as vehicles depots for one single, or many vehicles for example in a vehicle fleet. The most frequently visited stops/ parking areas of each respective vehicle in the vehicle fleet are detected and vehicle depots where the vehicle may charge the batteries. Thereby, vehicle charging infrastructure may be dimensioned and planned, based on the transport cycles/ sub-sequences starting and ending at each depot.

By examination of the individual cycles, i.e., from and back to the depot, the energy consumption during the cycle can be estimated, either by comparing the difference in total fuel consumed (a collected measure) or derive an energy figure from the distance driven (odometer data may be obtained from the vehicles). A model for the required energy consumption for example a constant energy/ km could thereby be calculated. It may be assumed that the energy consumed will need to be replenished at the depot. Aggregating the assumed energy uptake will give an estimation of the effect profile (required effect and energy demand).

Optionally, the same depot may be identified for a plurality of vehicles, and wherein the vehicle charging capacity of the identified vehicle depot may be dimensioned, based on estimated vehicle transportation requirements of the respective vehicles while driving along the respective sub-sequences.

By identifying the respective depot and stop locations for each individual vehicle, a better control of the requirements of the vehicle fleet is achieved.

Optionally, the dimensioning of the vehicle charging capacity of the identified vehicle depot may concern power need; peak power need; and/ or estimation of number of parked vehicles at a given moment in time.

The estimation of number of parked vehicles at a given moment in time may for example be estimated as an average number, a median number, a mean value, a maximum value, a minimum value, etc. The given moment in time may for example be a certain time of the day, a certain weekday, a part of the day, etc. The estimated power need may be power need per time unit, e.g., power need per hour, or power need at different times of the day, day of the week, etc. The dimensioning may also or alternatively concern transport mission range, transport mission energy usage, number of en route overnight stops per transport mission, etc.

Thereby, infrastructure planning concerning vehicle charging is achieved.

Optionally, the method may also comprise the step of determining to what extent the depot is contributing with traffic to a certain location, based on examination the sub-sequences starting and ending at the location.

By segmenting the transport data in this way, the data of the vehicles may be segmented by location, allowing aggregation of the total data set of vehicle stop information into a data product where everything may be precomputed. Thanks to the segmentation by location each location/ cell/ stop gives a contextual, by location, view of the vehicle fleet.

This data set may be explored via a map visualization where a user can examine how locations relate to one another in terms of how the traffic is flowing between them, and for all locations with vehicles assigned to them you can quantify the operation for the detected vehicle depot.

Optionally, the method may comprise the additional step of establishing a list of vehicles of an operator, which vehicles may be associated with the identified depot, and/ or the determined stop location.

By adding the list of visiting vehicle I Ds to each cell/ stop location/ depot and the list of depot vehicles associated with each cell/ stop location/ depot, it becomes possible to filter locations and depots using the ID-lists for vehicle subsets. This is helpful when for example dimensioning charging infrastructure for a customer fleet of vehicles. In general, it is not possible from a privacy perspective to show the IDs for any visiting vehicle at any cell/ stop location/ depot, however, when the user/ operator provides a filter list of IDs, it is possible to show the IDs of matching visiting vehicles or matching depot vehicles. In this way the operation of individual vehicles can be understood, when analyzing a subset of vehicles, for example a customer fleet.

According to a second aspect, this solution is achieved by a controller for vehicle charging dimensioning of a vehicle depot. The controller is configured to determine stop locations of a vehicle, wherein one stop location is a geographical position where the vehicle has stayed longer than a pre-determined time period. The controller is also configured to associate each determined stop location with a grid-based representation of a geographical landscape, corresponding to the geographical position of the determined stop location. In addition, the controller is configured to establish a sequence of determined stop locations for the vehicle. Furthermore, the controller is configured to identify a depot among the determined stop locations of the established sequence, for the vehicle, based on recurrence and/ or duration of time the vehicle has stayed on each respective determined stop location. The controller is configured to split each established stop sequence of the vehicle into sub-sequences at the depot. Also, the controller is configured to dimension vehicle charging capacity of the identified vehicle depot for charging vehicle batteries of an electric vehicle, based on estimated vehicle transportation requirements of the vehicle while driving along the sub-sequences in a vehicle depot cycle.

Optionally, the controller may be configured to identify the same depot for a plurality of vehicles. Also, the controller may be configured to dimension the vehicle charging capacity of the identified vehicle depot, based on estimated vehicle transportation requirements of the respective vehicles while driving along the respective sub-sequences.

Optionally, the controller may also be configured to dimension the vehicle charging capacity of the identified vehicle depot, concerning power need; peak power need; and/ or an estimation of number of parked vehicles at a given moment in time.

Optionally, the controller may be configured to determine to what extent the depot may be contributing with traffic to a certain location, based on examination the sub-sequences starting and ending at the location.

Optionally, the controller may be additionally configured to establish a list of vehicles of an operator, which vehicles are associated with the identified depot, and/ or the determined stop location.

According to a third aspect, this solution is achieved by a computer program comprising instructions which, when the program is executed by a computer, cause the computer to carry out the steps of the method according to the first aspect.

According to a fourth aspect, this solution is achieved by a computer-readable storage medium comprising instructions which, when executed by a computer, cause the computer to carry out the steps of the method according to the first aspect.

Quantification of vehicle operations at stops/ locations identified as vehicles depots (for one or many vehicles) or other locations is achieved. By segmentation of the transport data, data segmented by location is retrieved. This allows to aggregate the total data set of vehicle stop information into a data product where everything is precomputed. Thanks to the segmentation by location each location/ cell gives a contextual view of what is going on. This data set can be explored via a map visualization where a user of the system is enabled to examine how locations relate to one another in terms of how the traffic is flowing between them. For all locations with vehicles assigned to them it is possible to quantify the operation for the detected vehicle depot.

Other advantages and additional novel features will become apparent from the subsequent detailed description.

### FIGURES

Embodiments of the invention will now be described in further detail with reference to the accompanying Figures, in which:
- **Figure 1A**: illustrates a side view of a vehicle according to an embodiment;
- **Figure 1B**: illustrates a vehicle and a wireless communication with a controller according to an embodiment;
- **Figure 2A**: illustrates an overview of a vehicle driving on a road and a correspondence between the geographical landscape and a grid-based representation thereof;
- **Figure 2B**: illustrates a sequence of stop locations of the vehicle in an embodiment;
- **Figure 2C**: illustrates sub-sequences of a sequence of stop locations of the vehicle in an embodiment;
- **Figure 2D**: illustrates a depot and a sub-sequence of stop locations of the vehicle in an embodiment;
- **Figure 2E**: illustrates a depot and a sub-sequence of stop locations of the vehicle in an embodiment, and contribution of the depot to a certain location;
- **Figure 3**: illustrates an example of a vehicle interior according to an embodiment;
- **Figure 4**: is a flow chart illustrating an embodiment of a method.

### DETAILED DESCRIPTION

Embodiments of the invention described herein are defined as a method and a controller, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

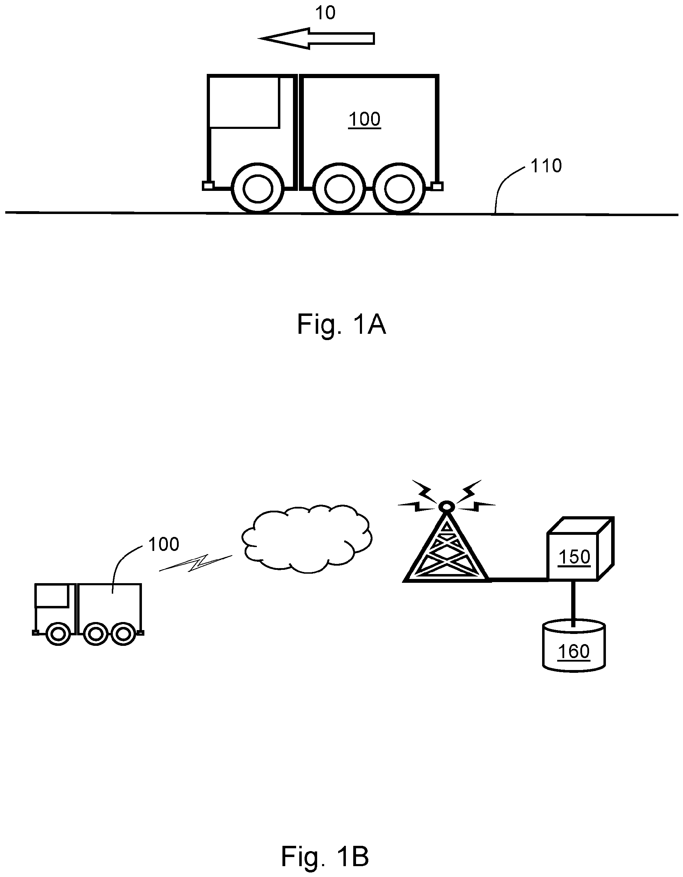

Figure 1A illustrates a scenario with a vehicle 100 driving in a driving direction 105 on a road 110. The vehicle 100 may be e.g., a truck, a bus, a van, a car, or any other similar type of vehicle with or without an attached trailer.

The vehicle 100 may be configured for running on a road, on a rail, in terrain, in water, in air, etc. The vehicle 100 may be driver controlled or driverless (i.e., autonomously controlled) in different embodiments. However, for enhanced clarity, the vehicle 100 is subsequently described as having a driver.

The vehicle 100 may be connected to Fleet Management services or similar service provided by a third party, see Figure 1B. Such service may comprise e.g., tracking of the vehicle 100 and diagnostics of vehicle parameters such as mileage and energy consumption, maintenance etc. The expression: "Fleet Management services" is to be regarded in a broad sense in this disclosure.

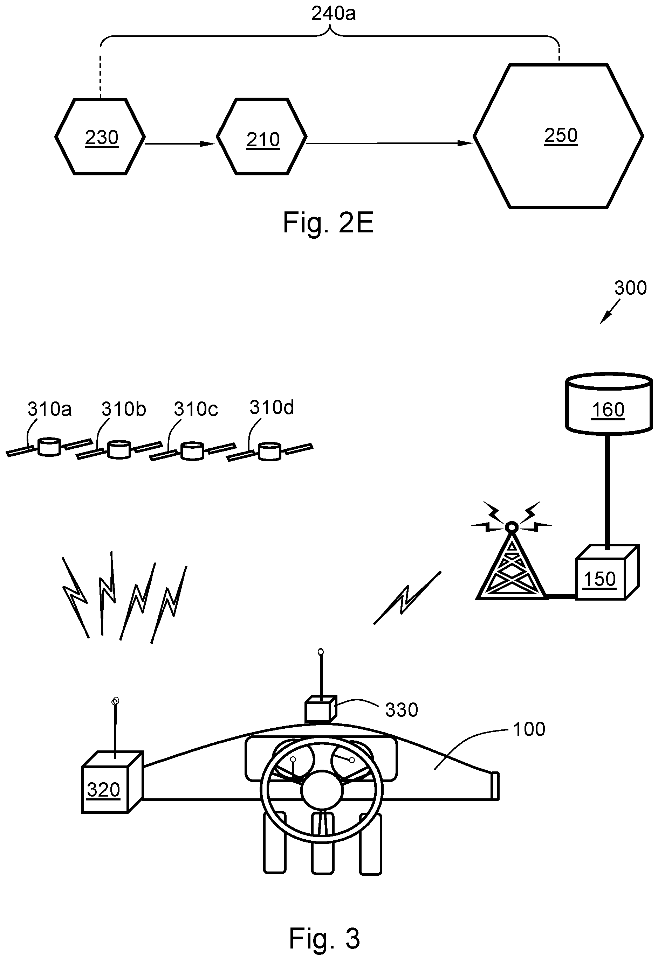

The vehicle 100 may comprise a control unit, a positioning device, a navigation unit and a wireless communication interface, as illustrated in Figure 3 and further described in the corresponding section of the description.

The wireless communication interface is configured to enable wireless communication with a server or backend, e.g., an external controller 150. The communication may be performed over a wireless interface comprising, or at least being inspired by cellular radio access technologies, for example via the internet.

The wireless communication may also or alternatively be performed according to any IEEE standard for wireless vehicular communication like e.g., a special mode of operation of IEEE 802.1 1 for vehicular networks called Wireless Access in Vehicular Environments (WAVE). IEEE 802.1 1 p is an extension to 802.11 Wireless LAN medium access layer (MAC) and physical layer (PHY) specification.

A plurality of vehicles 100 may be wirelessly connected to the controller 150. The plurality of vehicles 100 may transmit data to the controller 150. For example, the vehicles 100 may continuously generate position data and transmits the positioning data to the controller 150.

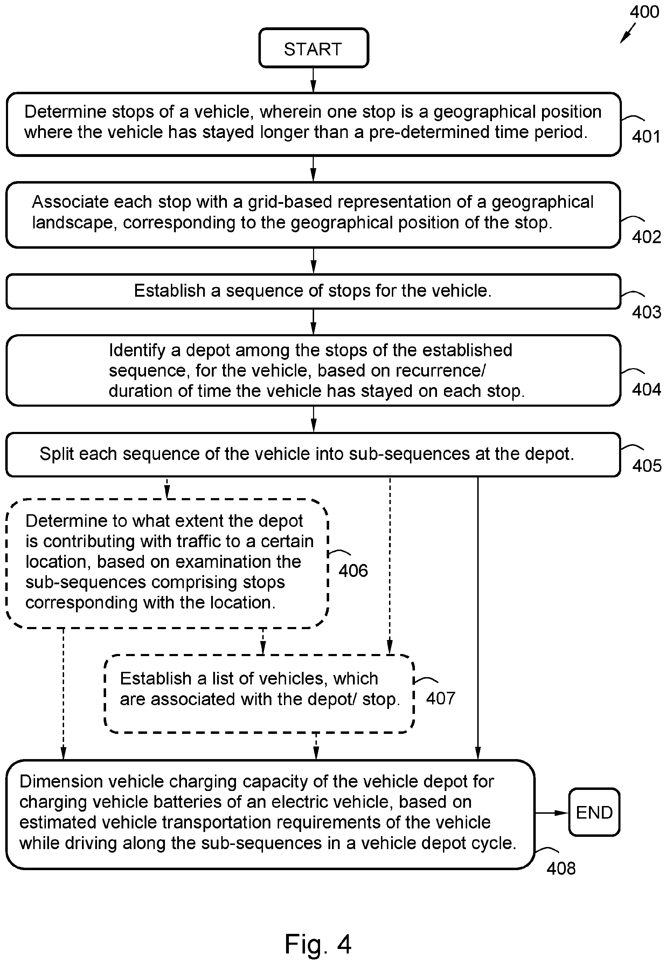

The controller 150 receives data (e.g., position data when the vehicle 100 is stationary for a period of time exceeding a time threshold) from the plurality of vehicles 100 and identify stop locations or parking areas based on the data using the method that will be described in relation to the flow chart of Figure 4. The stop locations or parking areas may in alternative embodiments also be presented to a user via a user interface. The controller 150 may also comprise, or be connected to a database 160, which database 160 may comprise vehicle related data and/ or geographical map data.

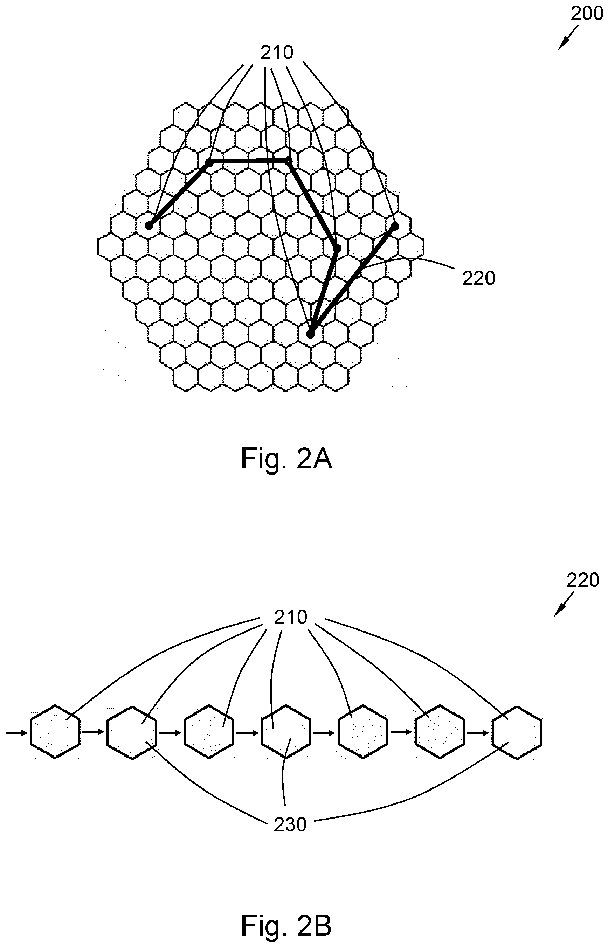

The principle of the disclosed method for vehicle charging dimensioning of a vehicle depot performed by the controller 150 will now first be briefly described with reference to Figures 2A-2E.

Figure 2A illustrates a grid-based representation 200 of a geographical landscape. The grid-based representation 200 may be part of a geospatial indexing system. In the illustrated example, the grid-based representation 200 is a hexagonal grid. However, in other embodiments, the grid-based representation 200 may comprise cells which are quadratic, triangular, octagonal, etc. The cells formed by the grid may be similarly sized and have a unique identity reference. The grid-based representation 200 may have a global coverage. A real world position thus corresponds with a cell, having a unique identity reference.

The vehicle 100 is driving on the road 110 along a route and makes a number of stops at a respective stop location 210. The geographical position of stop locations 210 (exceeding a threshold limit such as for example an hour) are forwarded via the wireless communication interface to the controller 150. The controller 150 may then translate the obtained geographical position of the stop location 210 into a corresponding cell in the grid-based representation 200.

The obtained stop locations 210 gives for each vehicle 100 a sequence 220 of visited cells. The expression "visited cells" here means that the vehicle 100 has stopped within the geographical position corresponding to the cell for a period of time exceeding the threshold limit.

The established sequence 220 of determined stop locations 210 for the vehicle 100 is illustrated in Figure 2B. At least one vehicle depot 230 is then identified by the controller 150, among the stop locations 210 of the sequence 220. The depot 230 may be identified based on recurrence and/ or duration of time the vehicle 100 has stayed on each respective determined stop location 210. For example, every stop having a duration exceeding a depot threshold limit; or the cell having most visits exceeding the depot threshold limit, for example.

In some alternative embodiments, the time of day when the length of the visit occurs may be taken into account for identifying the depot 230; or use other time limits.

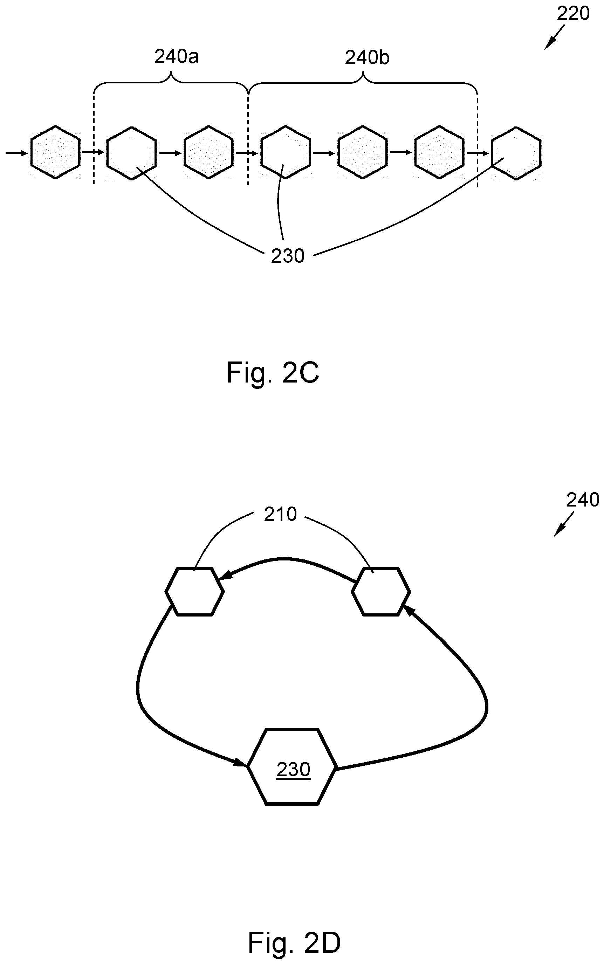

The controller 150 is also configured to, thereafter, split the stop sequence 220 of the vehicle 100 into sub-sequences 240a, 240b, as illustrated in Figure 2C. The split may be made by cutting the sequence 220 at every visit/ stop corresponding to the vehicle depot 230. The resulting sub-sequences 240a, 240b may be regarded to represent a transport mission done by the vehicle 100, from and back to the vehicle depot 230, as illustrated in Figure 2D.

It may be assumed that the vehicle 100 charges batteries while stopping at the vehicle depot 230, drives to one or several destinations/ stop locations 210 where a stop is made, for example for loading/ unloading cargo, passengers, etc., and then return back to the vehicle depot 230; or alternatively drives to another vehicle depot 230, when driving the sub-sequence 240/ transportation mission/ vehicle depot cycle.

The controller 150 is also configured to, based on estimated vehicle transportation requirements of the vehicle 100 while driving along the sub-sequences 240a, 240b in a vehicle depot cycle, the vehicle charging capacity of the vehicle depot 230 for charging vehicle batteries of an electric vehicle 100 is dimensioned. It may thereby be determined which capacity that is required at the vehicle depot 230 concerning charging capacity of vehicle batteries, in order to supply the electric vehicle 100 with sufficient power.

Also, the controller 150 may be configured to determine other statistics concerning the operations of the vehicle 100 based on analysis of the vehicle depot cycles, such as for example median transport mission range, median transport mission fuel/ energy usage, median transport mission energy usage, power need per hour at the vehicle depot, peak power need at the vehicle depot, median number of parked depot vehicles at a given time of day, and/ or what is the median number of en route overnight stops per transport mission.

The controller 150 may also be configured to examine origin destination questions for a location. Thus, it may be determined to what extent a particular depot 230 may contribute with traffic to a certain destination/ location 250, based on examination the sub-sequences 240a, 240b/ vehicle depot cycles comprising stops corresponding with the location 250, as schematically illustrated in Figure 2E, wherein the sub-sequences start and end at the location 250.

The controller 150 may furthermore be configured to establish a list of vehicles of an operator. The vehicles 100 may be associated with the identified depot 230, and/ or the determined stop location 210.

By adding the list of visiting vehicle IDs to each cell/ stop 210 and the list of depot vehicles assigned to each cell/ stop location 210, it is possible to filter locations and depots 230 using id-lists for vehicle subsets. This may be helpful when for example dimensioning charging infrastructure for a customer fleet of vehicles. In general, it may not be possible from a privacy perspective to show the IDs for any visiting vehicle 100 at any cell, however, when the user/ operator provides a filter list of vehicle IDs, it is possible to show the IDs of matching visiting vehicles or matching depot vehicles. In this way the operation of individual vehicles can be understood, when analyzing a subset of vehicles, for example a customer fleet.

The data set constructed in this way may be used in a visualization in a way that when selecting a location, all contributing depots 230 may be highlighted - for example by showing lines extending from the location 250 to the contributing vehicle depots 230.

The data set constructed in this way may also be used to visualize recurring transport segments (cell pairs from the sequence of cell visits) by aggregating the cell-pairs of the depot cycles, and for example showing pairs that have more than a certain number of occurrences. This will give a guise of the vehicle operation at the vehicle depot.

The ability to quantify vehicle operations at locations identified as vehicles depots 230, for one single, or many vehicles 100, or other locations 250 is a big advantage for planning and vehicle fleet management.

By segmenting the transport data in this way, the data of the vehicles may be segmented by location, allowing aggregation of the total data set of vehicle stop information into a data product where everything may be precomputed. Thanks to the segmentation by location each location/ cell/ stop locations 210 gives a contextual, by location, view of the vehicle fleet.

This data set may be explored via a map visualization where a user can examine how locations relate to one another in terms of how the traffic is flowing between them, and for all locations with vehicles assigned to them you can quantify the operation for the detected vehicle depot.

Figure 3 discloses a vehicle interior, according to an embodiment, illustrating an example of how the previous scenario may be perceived by the driver of the vehicle 100 when situated at any arbitrary position along the route.

A system 300 for vehicle charging dimensioning of a vehicle depot 230 vehicle may comprise a positioning device 320, a navigation unit and a wireless communication transceiver 330 for wireless communication with the controller 150, connected to the database 160.

The vehicle transceiver 330 in the vehicle 100 may communicate with the controller 150 over a wireless communication interface. The wireless communication may comprise or be based on e.g., a Vehicle-to-Vehicle (V2V) signal, or any other wireless signal based on, or at least inspired by wireless communication technology such as Wi-Fi, Ultra Mobile Broadband (UMB), Wireless Local Area Network (WLAN), Bluetooth (BT), or infrared transmission to name but a few possible examples of wireless communications.

The geographical position of the vehicle 100 may be determined by the positioning device 320 in the vehicle 100, which may be based on a satellite navigation system such as the Navigation Signal Timing and Ranging (Navstar) Global Positioning System (GPS), Differential GPS (DGPS), Galileo, GLONASS, or the like.

The geographical position of the positioning device 320, (and thereby also of the vehicle 100) may be made continuously with a certain predetermined or configurable time intervals according to various embodiments.

Positioning by satellite navigation is based on distance measurement using triangulation from a number of satellites 310a, 310b, 310c, 310d. In this example, four satellites 310a, 310b, 310c, 310d are depicted, but this is merely an example. More than four satellites 310a, 310b, 310c, 310d may be used for enhancing the precision, or for creating redundancy. The satellites 310a, 310b, 310c, 310d continuously transmit information about time and date (for example, in coded form), identity (which satellite 310a, 310b, 310c, 310d that broadcasts), status, and where the satellite 310a, 310b, 310c, 310d are situated at any given time. The GPS satellites 310a, 310b, 310c, 310d sends information encoded with different codes, for example, but not necessarily based on Code Division Multiple Access (CDMA). This allows information from an individual satellite 310a, 310b, 310c, 310d distinguished from the others' information, based on a unique code for each respective satellite 310a, 310b, 310c, 310d. This information can then be transmitted to be received by the appropriately adapted positioning device comprised in the vehicles 100.

Distance measurement can according to some embodiments comprise measuring the difference in the time it takes for each respective satellite signal transmitted by the respective satellites 310a, 310b, 310c, 310d to reach the positioning device 320. As the radio signals travel at the speed of light, the distance to the respective satellite 310a, 310b, 310c, 310d may be computed by measuring the signal propagation time.

The positions of the satellites 310a, 310b, 310c, 310d are known, as they continuously are monitored by approximately 15-30 ground stations located mainly along and near the earth's equator. Thereby the geographical position, i.e., latitude and longitude, of the vehicle 100 may be calculated by determining the distance to at least three satellites 310a, 310b, 310c, 310d through triangulation. For determination of altitude, signals from four satellites 310a, 310b, 310c, 310d may be used according to some embodiments.

Having determined the geographical position of the positioning device 320 (or in another way), it may be presented on a map, a screen or a display device where the position of the vehicle 100 may be marked.

In some embodiments, the geographical position of the vehicle 100, and other possible vehicle related information related to the route planning, such as for example position/ distance to stop locations 210, depot 230 etc., may be displayed on an interface unit. The optional interface unit may comprise a dashboard, a screen, a head-up display, or any similar device.

Figure 4 illustrates an example of a method 400 for vehicle charging dimensioning of a vehicle depot 230, according to an embodiment. The method 400 aims at collecting and analysing vehicle data, in particular related to vehicle stop locations 210 along a route of a vehicle 100.

The vehicle 100 may be any arbitrary kind of means for conveyance, such as a truck, a bus, a car, or similar. The vehicle 100 may be driven by a driver or be autonomous in different embodiments.

In order to correctly be able to build the database 350, the method 400 may comprise a number of steps 401-408. However, some of these steps 401-408 may be performed solely in some alternative embodiments, like e.g., steps 406-407. Further, the described steps 401-408 may be performed in a somewhat different chronological order than the numbering suggests. The method 400 may comprise the subsequent steps:

Step 401 comprises determining stop locations 210 of a vehicle 100, wherein one stop location 210 is a geographical position where the vehicle 100 has stayed, i.e., remained stationary longer than a pre-determined time period, for example 15 minutes, one hour, three hours, etc.

The current vehicle position may be determined continuously while driving the vehicle 100 along the road 110, or at predetermined time intervals in different embodiments. The vehicle position may be determined at the vehicle 100 by a geographical positioning device 320, such as e.g., a GPS, and provided wirelessly to the controller 150.

Step 402 comprises associating each determined 401 stop 210 with a grid-based representation 200 of a geographical landscape, corresponding to the geographical position of the determined 401 stop location 210.

Step 403 comprises establishing a sequence 220 of determined 401 stop locations 210 for the vehicle 100.

Step 404 comprises identifying a depot 230 among the determined 401 stop locations 210 of the established 403 stop sequence 220, for the vehicle 100, based on recurrence and/ or duration of time the vehicle 100 has stayed on each respective determined 401 stop location 210.

The same depot 230 may be identified 404 for a plurality of vehicles 100 in some embodiments.

Step 405 comprises splitting each established 403 stop sequence 220 of the vehicle 100 into sub-sequences 240a, 240b at the depot 230.

Step 406 which may be performed only in some particular embodiments, comprises determining to what extent the depot 230 may contribute with traffic to a certain location 250, based on examination the sub-sequences 240a, 240b comprising stop locations 210 corresponding with the location 250.

Step 407 which may be performed only in some particular embodiments, comprises establishing a list of vehicles of an operator, which vehicles 100 may be associated with the identified 404 depot 230, and/ or the determined 401 stop location 210.

Step 408 comprises dimensioning vehicle charging capacity of the identified 404 vehicle depot 230 for charging vehicle batteries of an electric vehicle 100, based on estimated vehicle transportation requirements of the vehicle 100 while driving along the sub-sequences 240a, 240b in a vehicle depot cycle.

In embodiments wherein the same depot 230 has been identified 404 for a plurality of vehicles 100, the vehicle charging capacity of the identified 404 vehicle depot 230 may be dimensioned 408, based on estimated vehicle transportation requirements of the respective vehicles 100 while driving along the respective sub-sequences 240a, 240b.

The dimensioning 408 of the vehicle charging capacity of the identified 404 vehicle depot 230 may concern: power need; peak power need; and/ or estimation of number of parked vehicles at a given moment in time.

The estimation of number of parked vehicles at a given moment in time may for example be estimated as an average number, a median number, a mean value, a maximum value, a minimum value, etc. The given moment in time may for example be a certain time of the day, a certain weekday, a part of the day, etc. The power need may be estimated as power need per time unit, such as for example power need per hour; and/ or power need at during a certain time period/ time of the day/ weekday, etc.

The previously described method steps 401-408 to be performed in the controller 150 may be implemented through the one or more processors within the controller 150, together with computer program product for performing at least some of the functions of the steps 401-408. Thus, a computer program product, comprising instructions for performing the steps 401-408 in the controller 150 may perform the method 400 comprising at least some of the steps 401-408 for vehicle charging dimensioning of a vehicle depot 230, when the computer program is loaded into the one or more processors of the controller 150.

The computer program product mentioned above may be provided for instance in the form of a data carrier carrying computer program code for performing at least some of the step 401-408 according to some embodiments when being loaded into the one or more processors of the controller 150. The data carrier may be, e.g., a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the controller 150 remotely, e.g., over an Internet or an intranet connection.

The terminology used in the description of the embodiments as illustrated in the accompanying drawings is not intended to be limiting of the described method 400; controller 150; database 160; the computer program and/ or the vehicle 100. Various changes, substitutions and/ or alterations may be made, without departing from invention embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g., a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware but may also be distributed in other forms such as via Internet or other wired or wireless communication system.

## Claims

1. A method (400) for vehicle charging dimensioning of a vehicle depot (230), wherein the method (400) comprises the steps of:
determining (401) stop locations (210) of a vehicle (100), wherein one stop location (210) is a geographical position where the vehicle (100) has stayed longer than a pre-determined time period;
associating (402) each determined (401) stop location (210) with a grid-based representation (200) of a geographical landscape, corresponding to the geographical position of the determined (401) stop location (210);
establishing (403) a sequence (220) of determined (401) stop locations (210) for the vehicle (100);
identifying (404) a depot (230) among the determined (401) stop locations (210) of the established (403) stop sequence (220), for the vehicle (100), based on recurrence and/ or duration of time the vehicle (100) has stayed on each respective determined (401) stop location (210);
splitting (405) each established (403) stop sequence (220) of the vehicle (100) into sub-sequences (240a, 240b) at the depot (230);
dimensioning (408) vehicle charging capacity of the identified (404) vehicle depot (230) for charging vehicle batteries of an electric vehicle (100), based on estimated vehicle transportation requirements of the vehicle (100) while driving along the sub-sequences (240a, 240b) in a vehicle depot cycle.

2. The method (400) according to claim 1, wherein the same depot (230) is identified (404) for a plurality of vehicles (100), and wherein the vehicle charging capacity of the identified (404) vehicle depot (230) is dimensioned (408), based on estimated vehicle transportation requirements of the respective vehicles (100) while driving along the respective sub-sequences (240a, 240b).

3. The method (400) according to any one of the proceeding claims, wherein the step of dimensioning (408) the vehicle charging capacity of the identified (404) vehicle depot (230) concerns:
power need;
peak power need; and/ or
estimation of number of parked vehicles at a given moment in time.

4. The method (400) according to any one of the proceeding claims, comprising the additional step of:
determining (406) to what extent the depot (230) is contributing with traffic to a certain location (250), based on examination the sub-sequences (240a, 240b) starting and ending at the location (250).

5. The method (400) according to any one of the proceeding claims, comprising the additional step of:
establishing (407) a list of vehicles of an operator, which vehicles (100) are associated with the identified (404) depot (230), and/ or the determined (401) stop location (210).

6. A controller (150), for vehicle charging dimensioning of a vehicle depot (230), wherein the controller (150) is configured to:
determine stop locations (210) of a vehicle (100), wherein one stop location (210) is a geographical position where the vehicle (100) has stayed longer than a pre-determined time period;
associate each determined stop location (210) with a grid-based representation (200) of a geographical landscape, corresponding to the geographical position of the determined stop location (210);
establish a sequence (220) of determined stops (210) for the vehicle (100);
identify a depot (230) among the determined stop locations (210) of the established sequence (220), for the vehicle (100), based on recurrence and/ or duration of time the vehicle (100) has stayed on each respective determined stop location (210);
split each established stop sequence (220) of the vehicle (100) into sub-sequences (240a, 240b) at the depot (230); and
dimension vehicle charging capacity of the identified vehicle depot (230) for charging vehicle batteries of an electric vehicle (100), based on estimated vehicle transportation requirements of the vehicle (100) while driving along the sub-sequences (240a, 240b) in a vehicle depot cycle.

7. The controller (150) according to claim 6, configured to
identify the same depot (230) for a plurality of vehicles (100); and
dimension the vehicle charging capacity of the identified vehicle depot (230), based on estimated vehicle transportation requirements of the respective vehicles (100) while driving along the respective sub-sequences (240a, 240b).

8. The controller (150) according to any one of claims 6-7, configured to dimension the vehicle charging capacity of the identified vehicle depot (230), concerning
power need;
peak power need; and/ or
estimation of number of parked vehicles at a given moment in time.

9. The controller (150) according to any one of claims 6-8, configured to:
determine to what extent the depot (230) is contributing with traffic to a certain location (250), based on examination the sub-sequences (240a, 240b) starting and ending at the location (250).

10. The controller (150) according to any one of claims 6-9, configured to:
establish a list of vehicles of an operator, which vehicles (100) are associated with the identified depot (230), and/ or the determined stop location (210).

11. A computer program comprising instructions which, when the program is executed by a computer, cause the computer to carry out the steps of the method (400) according to any one of claims 1-5.

12. A computer-readable storage medium comprising instructions which, when executed by a computer, cause the computer to carry out the steps of the method (400) according to any one of claims 1-5.
